(19)

Europäisches
Patentamt
European
Patent Office
Office européen
des brevets

(11) **EP 3 761 197 A1**

(12) **EUROPEAN PATENT APPLICATION**
published in accordance with Art. 153(4) EPC

(43) Date of publication:
**06.01.2021 Bulletin 2021/01**

(21) Application number: **19760371.5**

(22) Date of filing: **28.02.2019**

(51) Int Cl.:
*G06F 21/50* (2013.01)          *G06Q 40/02* (2012.01)

(86) International application number:
**PCT/RU2019/000133**

(87) International publication number:
**WO 2019/168442 (06.09.2019 Gazette 2019/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2018 RU 2018107449**

(71) Applicant: **Bolshakov, Pavel Sergeevich
Moscow 119607 (RU)**

(72) Inventor: **Bolshakov, Pavel Sergeevich
Moscow 119607 (RU)**

(74) Representative: **ip21 Ltd
Central Formalities Department
Lakeside 300
Old Chapel Way
Broadland Business Park
Norwich, Norfolk NR7 0WG (GB)**

(54) **METHOD AND SYSTEM FOR PRODUCING A SCORING MODEL**

(57)     The present invention has been designed for credit bureaus.

The objective of this invention is to check online user data for correctness and to use score models based on non-personal data of users to assess risks.

An additional objective of this invention involves checking user rights to access certain resources.

FIG. 1     System and method for a score model based on non-personal data of users

EP 3 761 197 A1

## Description

**FIELD OF INVENTION**

The present invention relates to the work processes of credit bureaus, particularly to systems and methods for checking online user data for correctness and for using score models based on non-personal data of users to assess risks.

**DESCRIPTION OF THE RELATED ART**

Due to rapid IT development over the past decade, as well as to ever increasing proliferation of various computing devices, such as PCs, laptops, smartphones, etc., said devices have gained wide use across a number of fields, for all sorts of tasks--from surfing the Internet through electronic document circulation to banking. As more and more users have started using said computing devices for their activities in computer networks, the requirements for such activities have also grown more demanding: there have to be more services available, their speed and security have to be higher. For instance, managing one's finances through a banking online account requires that sensitive data accessible there are protected, the user can be logged in quickly, and their actions have immediate results.

Today, using data exchange means, which are not secure enough, between clients and remote services may cause significant material and financial losses. In the financial sector, the very fact of using personal data raises high demands for their security, since, for instance, forging user personal data may cause bank customers to lose their money. Any fraudulent financial information is capable of incurring multibillion losses or paralyzing the stock markets. In the insurance sector, fraudulent information may cause insurance companies to lose money due to illegal payments. Therefore, nowadays the problem of assessing risks posed by user's actions or used-provided data is of utmost importance. For example, to settle a number of user financial transactions, such as loans, first the probability has to be assessed that the user data presented correspond to the given user and that it is likely that the user is going to pay back the loan.

In order to solve the above tasks, a variety of credit score models are used, wherein each such model has its own advantages and disadvantages. Some score models are capable of providing very accurate assessments, but are extremely time- and resource consuming. Other score models require personal user data, which can be compromised or be subject to unauthorized access (and, as is often the case, it can be simply prohibited to transfer or store such data in accordance with the law of the user's country). Also, the most widespread challenge is that there is not enough data available for said score models to work with. For instance, 70--85%% users applying for credits online, on average, have substantial credit histories, while 60--80%% users have informative social media profiles.

There is a conventional technology for computer-based assessment of the borrower's credit risks in online crediting (see US 8,560,436 B2). To achieve this, the disclosed service collects borrower's data from social networks and uses them to generate an assessment of the borrower's profile, based on pre-set rules and cross references that have been identified with the help of the collected data.

There is another conventional technology for user data verification (see US 9,684,905). To achieve this, the consumer assets are checked, as requested, by analyzing sensitive consumer data and relevant circumstantial data. Based on the asset parameters (its type, cost, etc.) and consumer data that have been analyzed, the used data can be declared as having been successfully verified.

These conventional technologies described above are good at tackling checks of users, user data, etc., but at the same time they require confidential or personal user data to operate, and may take much time to do their job.

The present invention allows to solve the task of assessing (scoring) credit risks or user data credibility based on user's non-personal data (for online crediting, too), while also improving data availability up to 99% and higher.

**SUMMARY OF THE INVENTION**

The present invention has been designed for credit bureaus.

The objective of this invention is to check online user data for correctness and to use score models based on non-personal data of users to assess risks.

This invention further involves checking user rights to access certain resources.

To achieve these objectives, there is provided a system for special indexation of online users and for creation of a score model based on non-personal data of users to assess risks, the system comprising: a data collecting means for collecting data from a user's client device and for sending the collected data to an indexing means, wherein the data to be collected include at least: the data of a user's online session at an online resource of a server; the data of the user's client device participating in data exchange with the server; and the data of user's activity on the client device; an indexing means for calculating indexes based on the collected data and using pre-set rules, and for sending the calculated indexes to a risk assessment means; a risk assessment means for calculating the risks of a user accessing server resources, based on the calculated indexes; and a right generating means for generating access rights for a user to access server resources, based on the calculated risks.

In another exemplary embodiment of the system, which has a client/server architecture, the data collecting means operates on the client side; the indexing means and the risk assessment means operate on the side of the service provider server; while the right generating means operates on the side of the resource server.

In yet another exemplary embodiment, in order to collect the user's data, the data collecting means is installed on the user's client device first, at the user's request.

In another exemplary embodiment of the system, the indexing means is further capable of assessing the completeness of the collected data, and, in case the collected data are not complete enough, generating a request for collecting additional data and sending it to the data collecting means.

In yet another exemplary embodiment of the system, the risks of a user accessing server resources is a numerical value within a pre-defined range, where the lowest number reflects the maximum security of server resources when the given user interacts with them, and the highest number reflects the minimum security of server resources.

In another exemplary embodiment of the system, the security of server resources means that there is a possibility that, at least: the credit money will not be returned within the first 90 days after the estimated maturity date; the loan payment will not be effected within the first 90 days after the first such payment has been scheduled; said resources will be compromised; said resources will be modified; or said resources will be accessed in an unauthorized fashion.

In yet another exemplary embodiment of the system, the access rights for the user to access the server resources are represented by the user's registration on said server.

In another exemplary embodiment, the system further comprises a log-in means for: calculating indexes based on the collected data; at the first user's request to the server for accessing its resources, calculating their indexes and bringing the results in line with the generated access rights for the user to access the server resources; and at each subsequent user's request to the server for accessing its resources with the previously generated access rights for the user to access the server resources, matching the new indexation results with the indexation results obtained at the first user's request.

In another aspect of the present invention, to achieve the stated objectives, there is provided a method for the systems for special indexation of online users and for risk assessment (scoring) using non-personal data of users, the method comprising the following steps performed by the means provided in the systems for indexation and scoring using non-personal data of users: collecting data from a user's client device, wherein the data to be collected include at least: the data of a user's online session at an online resource of a server; the data of the user's client device participating in data exchange with the server; and the data of user's activity on the client device; calculating indexes based on the collected data and using pre-set rules; based on the calculated indexes, calculating the risks of a user accessing server resources; and based on the calculated risks, generating access rights for a user to access server resources.

In an exemplary embodiment of the method, in order to collect the user's data, the data collecting means is installed on the user's client device first, at the user's request.

In another exemplary embodiment of the method, after the index calculation step, the completeness of the collected data is further assessed, and, in case the collected data are not complete enough, a request for collecting additional data is generated and sent to the data collecting means.

In yet another exemplary embodiment of the method, the risks of a user accessing server resources is a numerical value within a pre-defined range, where the lowest number reflects the maximum security of server resources when the given user interacts with them, and the highest number reflects the minimum security of server resources.

In another exemplary embodiment of the method, the security of server resources means that there is a possibility that, at least: the credit money will not be returned within the first 90 days after the estimated maturity date; the loan payment will not be effected within the first 90 days after the first such payment has been scheduled; said resources will be compromised; said resources will be modified; or said resources will be accessed in an unauthorized fashion.

In yet another exemplary embodiment of the method, the access rights for the user to access the server resources are represented by the user's registration on said server.

In another exemplary embodiment, the method further comprises: calculating indexes based on the collected online session data; at the first user's request to the server for accessing its resources, calculating their indexes and bringing the results in line with the generated access rights for the user to access the server resources; and at each subsequent user's request to the server for accessing its resources, using the previously generated access rights for the user to access the server resources, that correspond to the calculated indexes.

## BRIEF DESCRIPTION OF THE ATTACHED FIGURES

FIG. 1 is a sample structural diagram of the system for checking online user data for correctness and for using score models based on non-personal data of users to assess risks.

FIG. 2 is a sample structural diagram of the method for checking online user data for correctness and for using score models based on non-personal data of users to assess risks.

FIG. 3 is a sample structural diagram of the credit bureau's system of operation based on checking online user data for correctness, using score models based on non-personal data of users to assess risks.

FIG. 4 is a sample structural diagram of the credit bureau's method of operation based on checking online user data for correctness, using score models based on non-personal data of users to assess risks.

FIG. 5 illustrates an exemplary general-purpose computer system, an exemplary personal computer, or an exemplary server.

While the present invention may be presented in various modifications and alternative embodiments, its distinctive features illustrated by the attached figures will be detailed in the following description. It must be clear, however, that the present disclosure shall not be construed as limiting the present invention to the described embodiments only. Conversely, all the numerous modifications, changes and variations shall be considered as falling within the scope of the present disclosure, as described by the attached claims.

## DETAILED DESCRIPTION OF THE PREFERRED EMBODIMENTS

Objects and features of the present invention, methods for achieving these objects and features will become apparent by reference to the practical embodiments. However, the present invention is not limited to the exemplary embodiments disclosed below, it may be embodied in various forms. Summary contained in the description, is nothing but specific details secured to aid those skilled in the art in a comprehensive understanding of the invention, and the present invention is only defined within the scope of the appended claims.

First, a number of terms have to be defined, which will be used hereinafter to describe the preferred embodiments of the present invention according to this disclosure.

*Credit score* is a system for assessing a person's solvency (credit risks) based on numerical statistical methods. The scoring process involves assigning credit points and then checking whether the total meets the creditor's requirements. It is done either by credit experts or with automated systems.

*Credit behavior* describes how a user manages their loans. Credit behavior data include credit data (amount loaned, loan terms, maturity, etc.) and credit management data (payment dates, missed payments, etc.).

*Rare events* are events that occur rarely, i.e. their rate of occurrence is low--not exceeding 1% or 0.5% of the total number of events.

*Rare event statistical stability check* for an individual process or object involves checking the character and impact of a rare event in different time frames, accompanying conditions and test settings of the process/object, in case said event has statistical significance, if any, considering its nature.

*Statistical model splicing $f_1$ and $f_2$* is a composition of said models. Usually, statistical models are "spliced" when said models belong to different types, in order to improve their KS and/or Gini values.

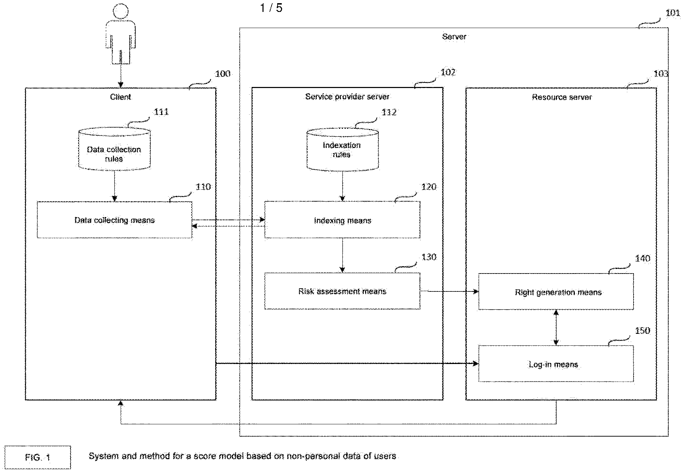

FIG. 1 is a sample structural diagram of the system for using score models based on non-personal data of users.

The structural diagram of the score model based on non-personal data of users comprises a client **100**, a server **101**, a service provider server **102**, a resource server **103**, a data collecting means **110**, data collection rules **111**, indexation rules **112**, an indexing means **120**, a risk assessment means **130**, a right generating means **140**, a log-in means **150**.

For example, the client **100** may be represented by a user's mobile device (a phone, smartphone, etc.), a PC, a laptop, etc., while the servers **102** and **103** may be represented by a distributed system of servers.

In some embodiments, the server **102** is the service provider server, while the server **103** is the online bank server.

In some exemplary embodiments, the servers **102** and **103** are combined into a single server or a cluster of servers **101,** which may be represented by a distributed system, in which the first component of the server **101** is responsible for user interactions, and the second component is responsible for analysis of user-provided data, wherein the first component comprises the indexation rules **112,** the indexing means **120,** the risk assessment means **130,** and stores the data collecting means **110** to be installed on the client **100** to collect non-personal data, while the second component comprises the right generating means **140** and the log-in means **150.**

The division of the server **101** into two parts, i.e. a resource of bank server **103** and a service provider server **102,** should reduce the affiliation risk, so that the analyzing server **102** is not linked with the server **103** by neither share rights, nor intellectual rights, or special usage rights. Said division allows to improve the informative value and work accuracy of the server **102,** so that this service provider server is able to interact with servers **103** of various non-affiliated companies.

For example, the user is applying for a bank credit via the bank's website. On their mobile phone **100,** the user opens the browser to access the bank's website **103**. The website is hosted by the bank server **103,** while the non-personal data are collected by the service provider server **102,** wherein the service provider is a company that processes said data, performs indexation and calculates the risks. The non-personal data are collected according to the agreement with the owner of the server **103**. The results of the data analysis are sent back to the bank server **103,** and, depending on them, the bank server **103** generates user rights. Therefore, the system for checking online user data for correctness and for using score models based on non-personal data of users to assess risks may involve interactions between the client **100,** the (data) collecting server **103,** and the (data) analyzing server **102,** wherein both a single collecting server **103** may interact with multiple analyzing servers **102,** and a single analyzing server **102** may interact with multiple collecting servers **103** (e.g., a single bank may have several partner companies that analyze customer-provided data, or a single company that analyzes customer-provided data may work with several banks).

The data collecting means **110** is capable of collecting data from the user's client device (client) **100** and for sending them to an indexing means **120,** wherein the data to be collected include at least:

- the data of a user's online session at an online resource of the server **103;**

- the data of the user's client device **100** participating in data exchange with the server **103** and/or **102;** and

- the data of user's activity on the client device **100.**

For instance, the data of a user's online session may include:

- the marker (ID) of the online session, and

- online connection attributes, including at least one of the following:

  ○ the connection (address) source and receiver (including IPV4 and IPV6), or

- the browser mask and online request header, as well as other attributes, without which the standard online connection is impossible.

In some embodiments, the data of the user's client device **100** include at least:

- the physical parameters of the client's **100** components, such as CPU, screen resolution, screen PPI, etc.,

- the parameters of the operating system installed on the client **100,** which controls the client **100,** and

- the applications that are installed and run on the client **100,** and which are available in the current security mode (application names, versions, operation modes, etc.).

In some embodiments, the operating system parameters include at least:

- its name,

- its version and revision, and

- its bit width.

For example, Microsoft Windows 7, 64-bit.

In some embodiments, he data of user's activity include at least:

- data input parameters including at least:

  ○ special keys pressed and special characters inputted by the user,

  ○ pauses between inputting data (in a broader context, the frequency of inputting data),

  ○ the application used to input data (including the above parameters of applications), and

- GUI elements of the operating system or applications that the user interacts with (e.g. buttons clicked by the user); and

- parameters of the user's activity in applications, the parameters including at least:

  ○ the time spent by the user in the application (start and end time, time spent to perform pre-set actions), and

  ○ statistical data related to the user's work with applications (e.g. how often pre-set actions are performed, etc.).

In some embodiments, the data collecting means **110** is capable of collecting data from the client **100,** at the server's **102** request.

In some embodiments, the server's **102** request to collect data using the data collecting means **110** specifies what kind of data are to be collected.

For example, the first server's **102** request to the client **100** specifies that parameters of physical components of the client **100** are to be collected. The next server's **102** request specifies that the pace of the user's text input is to be collected.

In some embodiments, the data collecting means **110** collects data from the client **100** according to the pre-set data collection rules **111,** wherein the server's **102** request may also specify which data collection rules **111** are to be applied.

In some embodiments, the data collection rules **111** are defined by the experts who maintain the service provider servers **102,** before these rules are used in the present system, using any conventional methods (e.g. based on statistical analysis of data that have been previously collected from other users and processed in order to determine which data can be used to calculate risks and what they can contribute to said calculation).

In some embodiments, in order to collect the user's data, the data collecting means **110** is installed on the user's client device **100** first, at the user's request.

In some embodiments, the data collecting means **110** is at least one of the following:

- a separate application that is installed on the client **100**, either automatically (i.e. with no user input) or semi-automatically (i.e. when the user is provided with the installation package of the means **110**, but has to install it on the client **100** manually); or

- a dedicated driver installed in the operating system on the client **100**.

Please note that the amount of data to be collected may be determined by the rights (including administrative rights) that are assigned either automatically, i.e. by the operating system, or manually, i.e. by the user.

For example, the user may use their smartphone (client **100**) to access the website of a credit organization (server **103**) in order to access its resources (server **103**), e.g. to apply for a loan, and so the user requests to be registered. As a result, a dedicated software application (data collecting means **110**) is downloaded from the server **102** and installed on the client **100**, which, when run, begins to collect the data specified above in the description of the data collecting means **110**, wherein the data may be collected:

- either from a pre-set list of data (e.g. CPU name, session marker, list of applications that are run on the client **100**),

- or based on an algorithm that determines which data have to be collected, depending on the data already collected (e.g. collect RAM data, if the CPU data of the client **100** could not be collected; or collect data on the software that is run on the client **100**, only if the operating system data of the client **100** have been collected, etc.).

The indexing means **120** is capable of:

- calculating indexes based on the data collected by the data collecting means **110**, using the pre-set indexation rules **112**, and

- sending the calculated indexes to the risk assessment means **130**.

In some embodiments, the indexing means **120** is further capable of:

- assessing the completeness of the collected data, and

- in case the collected data are not complete enough, generating a request for collecting additional data and sending it to the data collecting means **110**.

In some embodiments, to assess the completeness of the data collected from the client **100**, at least the following methods are used:

- assessing the data collected from the client **100** depending on the risk assessment statistics:
  First, each type of data collected from the client **100** is assigned a weight--a numerical value. The more a certain type of data contributes to risk assessment, the higher its weight. Said weights may be calculated using any conventional method, including statistical ones, based on the previous statistics of the collected data and calculated risks. Based on weights, certain types of data are selected, so that their aggregate contribution to risk assessment is enough to generate access rights for a given percentage of users.

- assessing the data collected from the client **100** based on the pre-made list containing the order of data that have to be collected sequentially.

For example, for the risk assessment means **130** to carry out risk assessment, all the above data that can be collected from the client **100** are sufficient. However, it may take much time to collect and process such amount of data, while the resources required to process said data may be unavailable. Thus, it may be inefficient to collect all available data. Therefore, a minimum required amount of data, which is required to assess risks for a given sample of users, is collected from the client **100**. In case these data are not enough, then a further portion of data is collected from the client, until the amount of data is enough for risk assessment.

For example, online session data, such as online session marker, parameters of connection between the client **100** and the server **103**, etc., are collected from the client **100**. After the risks are assessed, it may turn out that the calculated risks fall within the range that is not sufficient to unambiguously describe the risks. For example, the calculated risks amount to 0.75, whereas, in order to generate rights of access to the resources of the server **101**, the risks have to be within [0.0, 0.2] (permitted) or within [0.8, 1.0] (prohibited). Therefore, additional data of user's activity (i.e. what applications are running on the client **100**, which data are processed by said applications, etc.) are further collected from the client **100**. Based on further calculations, the risks now amount to 0.89, which allows the system to make a final decision to prohibit the user from accessing the resources of the server **101**.

In some embodiments, the indexing means **120** keeps requesting new data from the data collecting means **110**, at least until:

- the data completeness check returns a positive result,

- the amount of data stays within a pre-set range,

- the number of requests to the data collecting means **110** exceeds a pre-set number (e.g. set by the owner of the resource server during system setup).

The "pre-set range" and "pre-set number", etc., mentioned above, are attributes that are determined or set by at least:

- the developers of the present system for score models using non-personal data of users,

- the owners of the server **103,**

- credit bureau workers, who maintain the credit bureau hardware, or

- service provider **102** workers, who maintain the service provider's hardware.

Said attributes may be determined and set using any conventional method known in the art.
For example, credit bureau workers, who know, which resources are to be provided to the users, and, therefore, which user data are required to assess risks and which would be superfluous, can determine them and input them into the system in advance.
In some embodiments, the indexing means **120** is further capable of identifying the user (but not the person). The user can be identified by their index (user ID), which is linked not to personal data, but to the access to the given resource (such widely used tools as user login and password, or equivalents thereof, represented in any conventional form, e.g. user certificate or biometric data).
In some embodiments, the algorithm for calculating a unique identifier is based at least on:

- a randomly generated set of symbols of a given length,

- a hash sum (including checksums) of the data collected from the user's client device 100 (e.g. CRC32 or MD5),

- a counter that counts the number of users in the system (i.e. with each new user, the counter increases, so the identifier is always unique).

In some embodiments, the unique identifier is selected, so as to keep the probability of collision between said identifiers lower than a pre-set value. The probability of collision between identifiers is affected by at least:

- the identifier size (the larger the identifier, the lower the probability of it colliding with other identifiers), and

- the algorithm of calculating the identifier.

For example, said identifier may be represented by:

- a randomly generated 17-digit number, based on the new user counter, which drives the probability of collision to 0; or

- a checksum (e.g. MD5) calculated from the data collected from the user's client device **100**. Still, MD5 poses some collision risks and requires significant resources for online calculations involving a large number of parameters exceeding 10,000, and therefore is not recommended for practical use. For example, the number of parameters of a sound card may exceed 40,000 for each individual sound card, so the MD5 calculation may take more than 100 msec, which, coupled with other indicators and calculations to be made, severely restricts the practical use of this method.

For example, ID = 12345678901234567 or e214fb2120ed71e1c987233a54539987.
The risk assessment means **130** is capable of calculating the risks of a user accessing the resources of the server **103,** based on the indexes calculated by the indexing means **120** and additionally collected data, and of sending the calculated risks to the right generating means **140.**
In some embodiments, the risks of a user accessing the resources of the server **103** is a numerical value within a pre-defined range, where the lowest number reflects the maximum security of the resources of the server **103** when the given user interacts with them, and the highest number reflects the minimum security of server resources.
For example, risks may range from 0 (minimum risk) to 1 (maximum risk).
In some embodiments, risks are measured in discrete numbers.
For example, risks may have one of the following values: "minimum risk", "reasonable risk", "average risk", "unreasonable risk", or "maximum risk", which may correspond to the numerical values of 0.0, 0.25, 0.50, 0.75, and 1.0--from the above range.
In some embodiments, the risks are calculated according to the following algorithm:

    1. among the parameters collected from the client **100** and other sources, the most significant predictors (markers) are selected: Ai, where i ranges from 0 to n, and A0 is 1;

2. each significant predictor is assigned a numerical weight $W_i$, based on the task of maximizing the Gini or KS indicator, where $W_0$ is a constant, and the product of $A_0 * W_0$ is a linear regression part constant;

3. then, in order to assess the probability of one of the events described above, the following logistic regression formula may be used:

$$Y=1/(1+EXP(-1*SUM(A_i * W_i)))$$

4. it provides a result ranging from 0 to 1, which is utilized depending on the selected approach to determining significant predictors and their weights;

5. logistic regression may be replaced with a decision tree, neural networks or a combination (splicing) of several analytical tools, which include, but are not limited to, exemplary tools disclosed herein.

In some embodiments, the security of server resources means that there is a possibility that, at least:

• the credit money will not be returned within the preset number of days after the estimated maturity date (e.g. the first 90 days);

• the loan payment will not be effected within the preset number of days after the first such payment has been scheduled (e.g. the first 90 days);

• said resources will be compromised;

• said resources will be modified; or

• said resources will be accessed in an unauthorized fashion.

In some embodiments, the risks may be calculated using at least one of the following:

• a system for searching for and evaluating stable markers of rare events, including an anti-fraud scoring system (see a model-building example above);

• a system for seamless identification and indexation linked to the details of user's client device **100** and user's online behavior;

• a system for detecting and identifying stable identification markers or devices and user online behavior, online makeup of markers, monitoring of marker stability, and online indexation of devices and users taking into account type 1 and 2 errors (see examples below); or

• a system for evaluating user credit behavior through sharing non-personal data with other servers **103,** wherein the mechanism for evaluating the feedback from other servers **103** online is a mechanism for sharing credit behavior based on certain user client devices **100** (determined based on the index received from the indexation system **110).**

In some embodiments, the system for searching and evaluating stable markers of rare events is based at least on:

• increasing the frequency of rare events by localizing the sample, i.e. increasing the sample size.

Below is a practical example of increasing the sample size to detect and assess the impact of proxy connections on credit write-offs: the amount of proxy connections in the Russian sector of the Internet is 0.2--1.5%. Such low occurrence doesn't allow to reliably assess the statistical significance of this factor in terms of credit write-offs. In order to locate its impact, the sample size has to be increased, e.g. by applying additional conditions:

a) connections with wrong time zone, and

b) connections established from Data Centers.

If only condition (a) is applied, the share of proxy connections will increase to 6--7% of the total.
If both conditions (a) and (b) are applied, the share of proxy connections will increase to 40--80% of the total.
Large-size samples may be used to perform more detailed evaluation of the impact significance, in case there are size limits in place, and to treat the process and impact apart from wrong time zones or Data Centers, and without proxy connections. It will result in that the impact of a detected proxy connection will be significantly higher compared with (a), (b), or the combination thereof. Then, after the impact has been analyzed using a large-size sample, a detailed analysis of the rare event impact stability has to be carried out against the original set of events.

• evaluation of the nature and power of the rare event impact in various time frames, with various accompanying conditions and test settings of the process/object, and with statistical significance, if applicable;

• creation of independent decision-making rules (e.g. by analysts who maintain the server based on previously obtained data, i.e. statistics) based on rare events found and the mechanism of "splicing" the decision-making system and a standard anti-fraud scoring, with KS and/or Gini indicator optimization.

Here are examples of independent rules: when assessing and preventing online fraud at financial organizations, the following rules are used, independent from other indicators, i.e. blocking connection if a torrent connection has been detected; refusing a loan application if there was confirmed fraudulent behavior by this device in the past 12 months; etc.

For example, the importance of seamless identification (mechanisms) is based on at least three factors:

- the methods that provide higher hit rate, which is determined by the ratio between the number of markers found, the number of users, on whose clients **100** said markers have been searched for, and the time spent on said search;

- the nature of data collection, wherein the data are collected automatically, without any input from the user; and

- the information thus obtained has the widest regulatory resolution spectrum in the world, i.e. said mechanisms can be used in different countries.

For example, the hit rate of 0.995 means that identification markers for more than 99.5% of users or data for 99.5% of users of a given resource (server **103)** have been detected and identified. As a rule, for risk assessment and online fraud detection, it is enough to have hit rate of 0.995, compared to previous users accessing a given resource. However, it may take more than 10 years to collect biometric data from 99% of the country's population (based on past experience of different countries), while also requiring significant support from the regulator. Besides, the collection of biometric data won't be able to solve the problem of online fraud by itself (take, for instance, issues with "inserts", panoramic pictures, user's makeup, or graphical manipulations with photos). In practice, the higher the level and complexity of the identification system of the side of the server **103** and server **102,** compared with their competitors, the lower the financial losses caused by fraud.

The right generating means **140** is capable of generating access rights for a user to access the resources provided by the server **103,** based on the risks calculated by the risk assessment means **130.**

In some embodiments, the user's rights to access the resources of the server **103** include at least:

- data that are required for the user to access the resources of the server **103,** wherein said data have been generated during user registration on said server **103,** or

- a set of rules describing the order and terms of accessing the resources of the server **103** by the user, wherein the resources include at least:

  ○ tangible assets provided by the server **103,** and

  ○ informational assets located on the server **103.**

For example, the data required to obtain access to the resources of the server **103** may include:

- user's login and password (in any conventional form, e.g. a text or an image),

- user's certificate,

- indexation results **120** and risk assessment **130,** or

- user's biometric data (obtained by any conventional method, e.g. fingerprint scanning, retinal scanning, or voice sampling).

For example, the resources provided by the server **103** may be represented by money (or other tangible assets) that are given to the user (e.g. via a money transfer to the user's account) in the form of a loan, a credit card, etc.

For example, information resources located on the server **103** may be represented by:

- data provided to the user, such as files, databases, etc., or

- bank details required to receive tangible assets described above.

In some embodiments, the rules described above are represented by at least permission or prohibition to create, modify, or delete data used to interact with the resources on the server **103.**

For example, the user may provide their bank details to receive the requested tangible assets.

In some embodiments, information resources represent a certain technology for satisfying a financial need of the user. In this case, the information resource is an ordered set of interconnected organizational, technological, informational, financial, legal, etc. procedures which together form an integral set of rules of procedure for the bank (to interact with its customers in relation to money loans.

The log-in means **150** is capable of:

- at the first user's request to the server **103** for accessing the indexed resources on the server **102,** bringing the results in line with the generated access rights for the user to access the resources of the server **103;** and

- at each subsequent user's request to the server **103** for accessing its resources, using the previously generated access rights for the user to access the server resources, that correspond to the calculated indexes.

In some embodiments, the indexation, which is calculated based on the collected user data, is represented by a unique identifier that does not contain personal data, but is capable of identifying the user with a pre-set probability, e.g. 99+%, while being incapable of personifying them, i.e. incapable of linking personal user data with the indexation results.

The process of providing the identifier comprises the two following steps. The first step involves indexing of and searching through existing indexes for users or devices, after which the index/identifier is selected among relevant users or devices. In case there are no relevant users or devices, the second step involves creation of a new index/identifier.

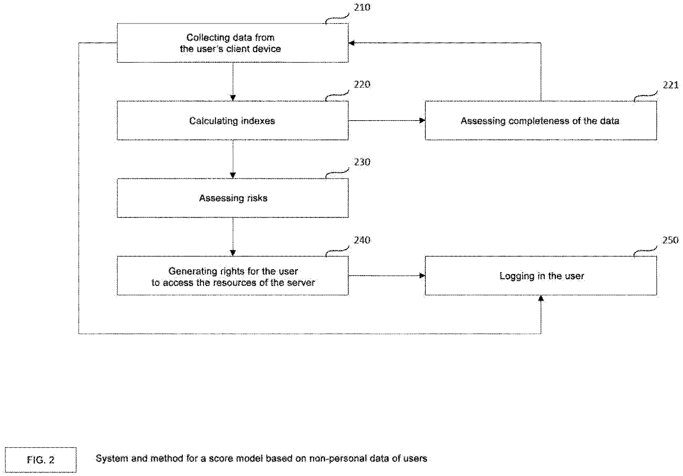

**FIG. 2** is a sample structural diagram of the method for checking online user data for correctness and for using score models based on non-personal data of users to assess risks.

The structural diagram of the method for checking online user data for correctness and for using score models based on non-personal data of users to assess risks illustrates the following steps: step **210,** in which the data from the user's client device are collected; step **220,** in which indexes are calculated; step **221,** in which the data completeness is assessed; step **230,** in which risks are assessed; step **240,** in which the rights for the user to access server resources are generated; and step **250,** in which the user is logged in.

In step **210,** the data collecting means **110** is used to collect data from the user's client device (client) **100,** wherein the user data to be collected include at least:

- the data of a user's online session at an online resource of the server **103;**

- the data of the user's client device **100** participating in data exchange with the server **103;** and

- the data of user's activity on the client device **100.**

In step **220,** the indexing means **120** is used to calculate indexes based on the data collected in step **210.**
Further, in step **221,** the indexing means **120** is used to assess the completeness of the data collected in step **210,** and, in case the collected data are not complete enough, to generate a request for collecting additional data and send it to the data collecting means **110.**
In step **230,** the risk assessment means **130** is used to calculate the risks of the user accessing the resources of the server **103,** based on the indexes calculated in step **220.**
In step **240,** the right generating means **140** is used to generate access rights for a user to access the resources of the server **103,** based on the risks calculated in step **230.**
In step **250,** the log-in means **150** is used to:

- request indexes from the indexing means **120** on the service provider server **102;**

- at the first user's request to the server **103** for accessing its resources, calculate their indexes and bringing the results in line with the generated access rights for the user to access the resources of the server **103;** and

- at each subsequent user's request to the server **103** for accessing its resources, compare the current indexes with those obtained at the first request, and, in case they match, the risks calculated in step **230** are manageable, and there are previously generated access rights for the user to access the resources of the server **103,** to grant access to the resources.

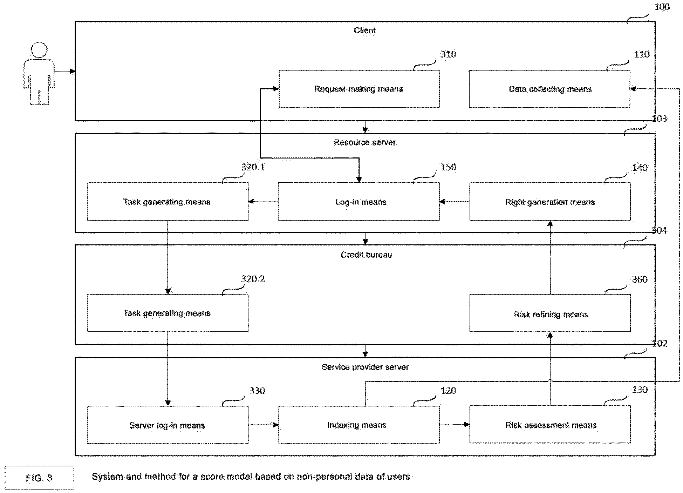

**FIG. 3** is a sample structural diagram of the credit bureau's system of operation based on checking online user data for correctness, using score models based on non-personal data of users to assess risks.
The structural diagram of the credit bureau's system of operation using score models comprises a client **100,** a service provider server **102,** a resource server **103,** a data collecting means **110,** an indexing means **120,** a risk assessment means **130,** a right generating means **140,** a log-in means **150,** a credit bureau **304,** a request making means **310,** task generating means **320.1** and **320.2,** a server log-in means **330,** and a risk refining means **360.**
The credit bureau's **304** system of operation based on checking online user data for correctness, using score models based on non-personal data of users to assess risks, has a client/server architecture, wherein the request making means **310** and the data collecting means **110** operate on the client **100** side; the right generating means **140,** the log-in means **150,** and the task generating means **320** operate on the side of the resource server **103;** the task generating means **320** and the risk refining means **360** operate on the side of the credit bureau **304;** the indexing means **120,** the risk assessment means **130,** and the server log-in means **330** operate on the side of the service provider **102.**
In some embodiments, the credit bureau **304,** the service provider server **102,** the resource server **103** may operate on the server **101,** which is a distributed system of servers. The interaction between the means of servers **102** and **103** is further described in **FIG. 1.** At the same time, combination of the servers **102** and **103** into a single distributed system will reduce its efficiency, as the informational value of the operation of the system of the service provider **102** will decrease.
The request making means **310** is capable of generating a user's request to access the resources of the server **103,** wherein the request is sent to the credit bureau **304** via the server **103,** and of sending the generated request to the task generating means **320.1** and **320.2.**

In some embodiments, the request making means **310** is at least one of the following:

• a separate application that is run on the client **100**; or

• a resource **103** website that is accessed through the browser run on the client **100**.

In some embodiments, the request making means **310** collects data from the user based on the data (e.g. represented by a user-filled electronic form) sent to the task generating means **320.1** and **320.2.**

For example, the user accesses the resource **103** website using **310** on their computer **100**. The website contains a form with the data required by the credit bureau **304** to fulfill the user's **100** log-in request on the server **103**.

The task generating means **320.1** is capable of:

• generating a request to send a generated request to the credit bureau's task generating means **320.2**; and

• further processing and checking or rights and authorization **140** and **150**.

The task generating means **320.2** is capable of:

• generating a request to send a generated request to the server log-in means **330** on various servers **102**; and

• further processing and risk refining by the means **360**.

In some embodiments, before the credit bureau **304** is able to process user's requests, said credit bureau **304** has to be registered with the service provider **102** by generating a request to access the service provider's **102** server. For this, the task generating means sets up an account on the service provider's **102** server and determines risk indicators, against which users are to be checked.

In some embodiments, after the credit bureau **304** has been registered with the service provider **102**, it obtains the data (executable code, API key, scenarios, etc.) that has to be integrated into the means of the credit bureau **304** to enable interaction with the service provider **102**.

The server log-in means **330** is capable of:

• registering new credit bureaus to allow them to access the service provider's 102 services; and

• transferring the data and/or request details received from a registered credit bureau **304** to the indexing means **120**.

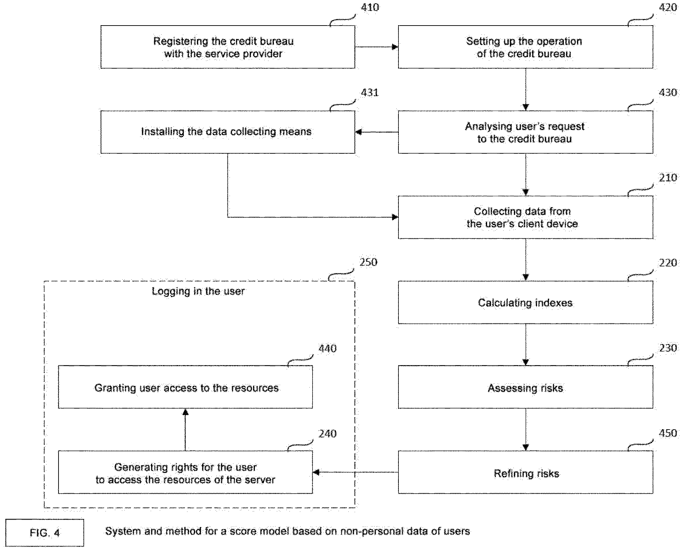

**FIG. 4** is a sample structural diagram of the credit bureau's method of operation based on checking online user data for correctness, using score models based on non-personal data of users to assess risks.

The structural diagram of the credit bureau's method of operation based on checking online user data for correctness, using score models based on non-personal data of users to assess risks illustrates the following steps: step **410**, in which a credit bureau **304** is registered with the service provider **102**; step **420**, in which the operation of the credit bureau **304** is set up; step **430**, in which the user's request to the credit bureau **304** is analyzed; step **431**, in which the data collecting means **110** is installed; step **440**, in which the user is granted access to the resources of the server **103**; step **450**, in which the risks are refined; step **210**, in which the data from the user's client device **100** are collected; step **220**, in which indexes are calculated; step **230**, in which risks are assessed; step **240**, in which the rights for the user to access the resources of the server **103** are generated; and step **250**, in which the user is logged in.

According to some embodiments, the steps performed by the means at the credit bureau **304** and the steps performed by the service provider **102** are actually performed on the server **103**, which is a distributed system comprising a bank server **103**, where the steps designed for the means at the credit bureau **304** are performed, and a service provider **102**, where the steps designed for the means of the service provider **102** are performed. The interaction between the means of the server **103** and service provider **102** is further described in **FIG. 1**; the steps performed by the means of the server **103** and service provider **102** are further described in **FIG. 2**. At the same time, combination of the servers **102** and **103** into a single distributed system will reduce its efficiency, as the informational value of the operation of the system of the service provider **102** will decrease.

In step **410**, the task generating means **320.2** is used to register the credit bureau **304**, by generating a request to access the risk assessment service and further sending the generated requests to the server log-in means **330**.

In step **420**, the server log-in means **330** is used to set up the operations of the credit bureau **304**, at the credit bureau's **304** service request to the service provider **102**.

In step **430**, the task generating means **320.1** is used to analyze the user's request to the credit bureau **304**.

In step **431**, the task generating means **320.1** is used to install the data collecting means **110**.

In step **440**, the right generating means **140** is used to grant the user access to the resources of the server **103**.

In step **450**, the risk refining means **360** is used to refine the risks.

In step **250**, the user is logged in, wherein step **250** involves two further steps that are performed in sequence: step **240**, in which the rights for the user to access the resources of the server **103** are generated, and step **440**, in which the user is granted access to the resources of the server **103**.

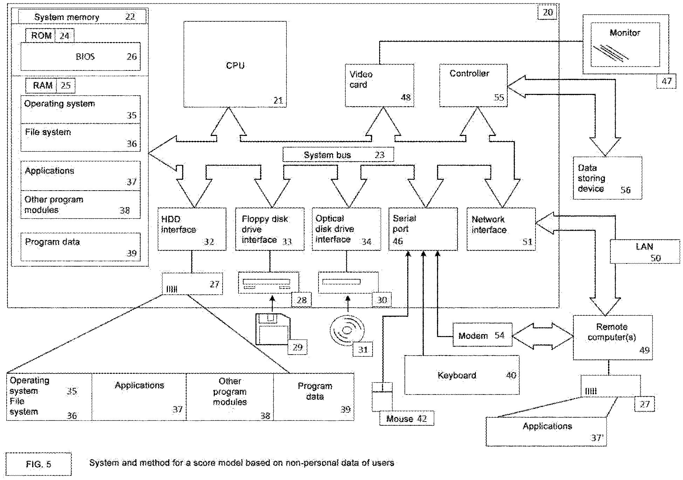

**FIG. 5** illustrates an exemplary general-purpose computer system, an exemplary personal computer, or an exemplary server **20** comprising a CPU **21**, a system memory **22** and a system bus **23** that carries various components of the system, including the memory connected to the CPU **21**. The system bus **23** is made according to any conventional bus structure comprising a bus memory or a bus memory controller, a peripheral bus, and a local bus, which is capable of interacting with any other bus-based architecture. The system memory comprises a read-only memory (ROM) **24** and a random access memory (RAM) **25**. The basic input/output system (BIOS) **26** comprises basic procedures enabling data exchange between the components of a PC **20**, e.g. when an operating system is loaded from the ROM **24**.

The PC **20** comprises, in turn, a hard disk drive (HDD) **27** for writing and reading data, a floppy disk drive **28** for writing and reading data to and from floppy disks **29**, and an optical disk drive **30** for writing and reading data to and from floppy disks optical disks **31**, such as CD-ROM, DVD-ROM, or other optical data carriers. The HDD **27**, floppy disk drive **28**, and optical disk drive **30** are connected to the system bus **23** via the HDD interface **32**, floppy disk drive interface **33**, and optical disk drive interface **34**, correspondingly. Said drives and their corresponding computed data carriers are non-volatile means for storing computer-executable instructions, data structures, program modules, and other PC **20** data.

According to the present disclosure, there is provided a system comprising an HDD **27**, a floppy disk **29**, and an optical disk **31**, but it should be appreciated by those skilled in the field that other computer data carriers **56** can also be used, which are capable of storing data in computer-readable form such as solid-state drives, flash drives, digital disks, RAM, etc., that are connected to the system bus **23** via the controller **55**.

The computer **20** has a file system **36** storing an operating system **35**, together with additional software applications **37**, other program modules **38** and program data **39**. The user is able to input instructions and information into the PC **20** via input devices, i.e. the keyboard **40** and mouse **42**. Other input devices may also be used (not illustrated in the figure): a microphone, a joystick, a gaming console, a scanner, etc. Such input devices are, conventionally, connected to the computer system **20** via a serial port **46**, which is, in turn, connected to the system bus. However, said devices may be connected in a different manner, e.g. via a parallel port, MIDI-port (gameport), or a universal serial bus (USB). The monitor **47**, or another display, is also connected to the system bus **23** via an interface, e.g. a video card **48**. Besides the monitor **47**, the PC may be equipped with other peripheral output devices (not illustrated in the figure), such as speakerphones, a printer, etc.

The PC **20** is capable of working in a network environment, using a network connection to one or multiple remote computers **49**. The one or multiple remote computers **49** are similar PCs or servers comprising the same number of components illustrated in **FIG. 5** that describes the composition of the PC **20**, or a majority thereof. The computing network may further comprise other devices, such as routers, network stations, P2P devices, or other network nodes.

Network connections may together form both a local area network (LAN) **50** and a wide area network (WAN). Such networks are used in corporate computer networks, internal company networks, usually having access to the Internet. Both in LAN and WAN, the PC **20** is connected to the LAN **50** via a network card or network interface **51**. When accessing a network, the PC **20** may use a modem **54** or other means of accessing a WAN, such as the Internet. The modem **54**, which may be either internal or external, is connected to the system bus **23** via the serial port **46**. Please note that the network connections shown in the figure serve illustrative purposes only and do not describe the exact network configuration, i.e. there are different technical ways available to establish network connection between computers.

In conclusion, it should be noted that the details given in the description are examples that do not limit the scope of the present invention as defined by the claims.

## Claims

1. A system for checking online user data for correctness and for using score models based on non-personal data of users to assess risks, the system comprising:

   1) a data collecting means for collecting data from a user's client device and for sending the collected data to an indexing means, wherein the data to be collected include at least:

      • the data of a user's online session at an online resource of a server;
      • the data of the user's client device participating in data exchange with the server; and
      • the data of user's activity on the client device;

   2) an indexing means for calculating indexes based on the collected data and using pre-set rules, and for sending the calculated indexes to a risk assessment means;
   3) a risk assessment means for calculating the risks of a user accessing server resources, based on the calculated indexes; and
   4) a right generating means for generating access rights for a user to access server resources, based on the calculated risks.

2. The system of claim 1, which has a client/server architecture, wherein the data collecting means operates on the client side, while the indexing means, the risk assessment means, and the right generating means operate on the side of at least one server.

3. The system of claim 1, wherein, in order to collect the user's data, the data collecting means is installed on the user's client device first, at the user's request.

4. The system of claim 1, wherein the indexing means is further capable of assessing the completeness of the collected data, and, in case the collected data are not complete enough, generating a request for collecting additional data and sending it to the data collecting means.

5. The system of claim 1, wherein the risks of a user accessing server resources is a numerical value within a pre-defined range, where the lowest number reflects the maximum security of server resources when the given user interacts with them, and the highest number reflects the minimum security of server resources.

6. The system of claim 5, wherein the security of server resources means that there is a possibility that, at least:

   • the credit money will not be returned within the first 90 days after the estimated maturity date;
   • the loan payment will not be effected within the first 90 days after the first such payment has been scheduled;
   • said resources will be compromised;
   • said resources will be modified; or
   • said resources will be accessed in an unauthorized fashion.

7. The system of claim 1, wherein the access rights for the user to access the server resources are represented by the user's registration on said server.

8. The system of claim 1, further comprising a log-in means for:

   1) calculating indexes based on the collected data;
   2) at the first user's request to the server for accessing its resources, calculating their indexes and bringing the results in line with the generated access rights for the user to access the server resources; and
   3) at each subsequent user's request to the server for accessing its resources, using the previously generated access rights for the user to access the server resources, that correspond to the calculated indexes.

9. A method for checking online user data for correctness and for using score models based on non-personal data of users to assess risks, the method comprising the following steps performed by the means provided in the system of claim 1:

   1) collecting data from a user's client device, wherein the data to be collected include at least:

      • the data of a user's online session at an online resource of a server;
      • the data of the user's client device participating in data exchange with the server; and
      • the data of user's activity on the client device;

   2) calculating indexes based on the collected data and using pre-set rules;
   3) based on the calculated indexes, calculating the risks of a user accessing server resources; and
   4) based on the calculated risks, generating access rights for a user to access server resources.

10. The method of claim 9, wherein, in order to collect the user's data, the data collecting means is installed on the user's client device first, at the user's request.

11. The method of claim 9, wherein, after the index calculation step, the completeness of the collected data is further assessed, and, in case the collected data are not complete enough, a request for collecting additional data is generated and sent to the data collecting means.

12. The method of claim 9, wherein the risks of a user accessing server resources is a numerical value within a pre-defined range, where the lowest number reflects the maximum security of server resources when the given user interacts with them, and the highest number reflects the minimum security of server resources.

13. The method of claim 12, wherein the security of server resources means that there is a possibility that, at least:

   • the credit money will not be returned within the first 90 days after the estimated maturity date;
   • the loan payment will not be effected within the first 90 days after the first such payment has been scheduled;
   • said resources will be compromised;

• said resources will be modified; or
• said resources will be accessed in an unauthorized fashion.

14. The method of claim 9, wherein the access rights for the user to access the server resources are represented by the user's registration on said server.

15. The method of claim 9, further comprising the following steps:

1) calculating indexes based on the collected online session data;
2) at the first user's request to the server for accessing its resources, calculating their indexes and bringing the results in line with the generated access rights for the user to access the server resources; and
3) at each subsequent user's request to the server for accessing its resources, using the previously generated access rights for the user to access the server resources, that correspond to the calculated indexes.

FIG. 1    System and method for a score model based on non-personal data of users

210

Collecting data from
the user's client device

220

Calculating indexes → Assessing completeness of the data    221

230

Assessing risks

240

Generating rights for the user
to access the resources of the server → Logging in the user    250

FIG. 2    System and method for a score model based on non-personal data of users

FIG. 3    System and method for a score model based on non-personal data of users

410

Registering the credit bureau
with the service provider

420

Setting up the operation
of the credit bureau

431

Installing the data collecting means

430

Analysing user's request
to the credit bureau

210

Collecting data from
the user's client device

250

Logging in the user

220

Calculating indexes

440

Granting user access to the resources

230

Assessing risks

240

Generating rights for the user
to access the resources of the server

450

Refining risks

FIG. 4    System and method for a score model based on non-personal data of users

FIG. 5    System and method for a score model based on non-personal data of users

## INTERNATIONAL SEARCH REPORT

| | |
|---|---|
| International application No. |
| PCT/RU 2019/000133 |

A.  CLASSIFICATION OF SUBJECT MATTER

G06F 21/50 (2013.01); G06Q 40/02 (2012.01)

According to International Patent Classification (IPC) or to both national classification and IPC

B.  FIELDS SEARCHED

Minimum documentation searched (classification system followed by classification symbols)

G06F G06Q

Documentation searched other than minimum documentation to the extent that such documents are included in the fields searched

Electronic data base consulted during the international search (name of data base and, where practicable, search terms used)

PatSearch (RUPTO internal), USPTO, PAJ, K-PION, Esp@cenet, Information Retrieval System of FIPS

C.  DOCUMENTS CONSIDERED TO BE RELEVANT

| Category* | Citation of document, with indication, where appropriate, of the relevant passages | Relevant to claim No. |
|---|---|---|
| A | US 2010/0010935 A1 (THOMAS SHELTON) 14.01.2010 | 1-15 |
| A | US 2013/0144888 A1 (PATRICK FAITH et al) 06.06.2013 | 1-15 |
| A | CN 101493913 A (ZHAOXI LU et al) 29.07.2009 | 1-15 |
| A | US 8744946 B2 (QUEST GROWTH PARTNERS, LLC) 03.06.2014 | 1-15 |

☐  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 June 2019 (24.06.2019) | 27 June 2019 (27.06.2019) |

| Name and mailing address of the ISA/ RU | Authorized officer |
|---|---|
| | |
| Facsimile No. | Telephone No. |

Form PCT/ISA/210 (second sheet) (July 1998)

**EP 3 761 197 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8560436 B2
- US 9684905 B